# EUROPÄISCHE PATENTANMELDUNG

(11) **EP 4 215 261 A1**
(43) Veröffentlichungstag der Anmeldung: **26.07.2023**
(21) Anmeldenummer: 23151667.5
(22) Anmeldetag: 16.01.2023
(51) Int. Cl.: B01D 65/02

(54) **VERFAHREN ZUR REINIGUNG EINES FILTERELEMENTES UND FILTERANLAGE**

(30) Priorität: 24.01.2022 DE 102022101551
(71) Anmelder: Intewa Ingenieur Gesellschaft für Energie und Wassertechnik mbH, 52068 Aachen (DE)
(72) Erfinder: RINGELSTEIN, Oliver, 52068 Aachen (DE)
(74) Vertreter: Benninger, Johannes

(57) **Zusammenfassung**

Es ist ein Verfahren zur Reinigung mindestens eines Filterelementes (3) einer Filteranlage (1) für Flüssigkeiten (4) offenbart. Bei dem Verfahren wird eine Flüssigkeitsoberfläche (9) einer durch die Filteranlage (1) aufgenommenen Flüssigkeit (4) in Schwingung versetzt. Weiter werden Verunreinigungen von dem mindestens einen hierbei in der Filteranlage (1) angeordneten Filterelement (3) mittels der in Schwingung versetzten Flüssigkeitsoberfläche (9) gelöst.

## Beschreibung

Die vorliegende Erfindung betrifft ein Verfahren zur Reinigung eines Filterelementes. Zudem betrifft die Erfindung eine Filteranlage.

Als vielversprechendes Verfahren zur Wasseraufbereitung hat sich in jüngerer Zeit die Membrantechnik etabliert. Bei der Membranfiltration werden, ähnlich wie bei einem Sieb, abhängig von den Membranporen, feinste Partikel bis hin zu gelösten Stoffen sowie Bakterien und Viren herausgefiltert.

Am Markt werden inzwischen viele unterschiedliche Membrantypen angeboten, die beispielsweise durch PE oder PFDE gebildet sein können. In Abhängigkeit des jeweiligen Filtrationsprozesses können solche Membranen darüber hinaus unterschiedliche Porenweiten ausbilden und somit zur Mikro-Filtration, zur Ultra-Filtration, zur NanoFiltration oder auch zur Umkehrosmose verwendet werden.

Wird eine Filtrationsvorrichtung über längere Zeit betrieben, so verringert sich erfahrungsgemäß die Durchflussleitung der Filtervorrichtung, da sich an der jeweiligen Membran Verunreinigungen und Ablagerungen festsetzen. Entsprechende Ablagerungen führen zudem zu einem erhöhten Energieverbrauch der Filtervorrichtung, was in der Praxis unerwünscht ist.

Derzeit auf dem Markt erhältliche Membranen besitzen hohe Anschaffungskosten. Es wurden aus diesem Grunde bereits diverse Verfahren entwickelt, mit welchen Membranen bei Verschmutzungen oder Ablagerungen gereinigt werden können, ohne dass Membranen einer Filtrationsvorrichtung ausgetauscht und durch neue Membranen ersetzt werden müssen. So ist es bereits bekannt, Ablagerungen bei Hohlfasermembranen durch eine Rückspülung zu entfernen. Auch ist es bekannt, Ablagerungen durch das Einbringen von Luftblasen und deren Scherwirkung von der Oberfläche der jeweiligen Membran zu lösen. Aufgrund der geringen Dichte der Luft ist die Scherwirkung allerdings begrenzt, weshalb häufig ein gewisser Anteil an der Membran zurückbleibt, welcher durch die Luftblasen nicht von der Membran gelöst werden konnte. Auch besteht ein weiteres Problem darin, dass bei Plattenmembranen der Plattenabstand und die Größe der Luftblasen genau eingestellt werden müssen, um eine ausreichende Wirkung zu erzielen, was sich in der Praxis oft als kompliziert und umständlich herausgestellt hat.

Bekannt ist es zudem, die einzelnen Membranen aus der Filtervorrichtung zu entnehmen und beispielsweise mit Wasser zu reinigen. Hierzu muss der Filtrationsprozess unterbrochen werden. Auch ist eine Entnahme der einzelnen Filter mit einem hohen Wartungsaufwand verbunden.

Eine Aufgabe der Erfindung kann darin gesehen werden, eine Möglichkeit zur Reinigung von Filtern bereitzustellen, welche die genannten Nachteile zumindest teilweise vermeidet.

Die Aufgabe wird durch die Gegenstände gelöst, welche die Merkmale in den unabhängigen Ansprüchen umfassen. Vorteilhafte Ausführungsformen werden durch die abhängigen Ansprüche beschrieben.

Die Erfindung betrifft ein Verfahren zur Reinigung mindestens eines Filterelementes einer Filteranlage für Flüssigkeiten. Bei dem Verfahren wird eine Flüssigkeitsoberfläche einer durch die Filteranlage aufgenommenen Flüssigkeit in Schwingung versetzt. Verunreinigungen werden von dem mindestens einen hierbei in der Filteranlage angeordneten Filterelement mittels der in Schwingung versetzten Flüssigkeitsoberfläche gelöst. Bei dem Verfahren kann somit eine Schwingungserzeugungseinrichtung vorgesehen sein, welche die Flüssigkeitsoberfläche einer durch die Filteranlage aufgenommenen Flüssigkeit in Schwingung versetzt.

Das Verfahren kann sehr einfach umgesetzt und ohne hohen Zeitaufwand durchgeführt werden, da das mindestens eine Filterelement in der Filteranlage verbleibt bzw. nicht aus der Filteranlage entnommen werden muss, wenn die Flüssigkeitsoberfläche der durch die Filteranlage aufgenommenen Flüssigkeit in Schwingung versetzt wird und hierbei Verunreinigungen von dem mindestens einen Filterelement abträgt. Zudem werden Verunreinigungen von dem mindestens einen Filterelement sehr effektiv und nahezu rückstandsfrei abgetragen, da die in Schwingung versetzte Flüssigkeitsoberfläche mit hohen Scherkräften auf das mindestens eine Filterelement einwirken kann.

Das mindestens eine Filterelement kann durch mindestens eine Filtermembran ausgebildet sein oder mindestens eine Filtermembran umfassen. Das mindestens eine Filterelement bzw. die mindestens eine Filtermembran kann hierbei vollständig oder zumindest teilweise durch Kunststoff und insbesondere durch PE und/oder PFDE gebildet sein. Alternativ oder ergänzend hierzu kann die mindestens eine Filtermembran Hohlfasern umfassen oder durch mindestens eine Plattenmembran ausgebildet sein. Auch kann es sein, dass die mindestens eine Filtermembran zur Ultrafiltration, zur Mikrofiltration oder zur Nanofiltration ausgebildet ist bzw. entsprechende Porenweiten besitzt.

Bei der Filteranlage kann es sich um eine solche Filteranlage handeln, die mittels Cross-Flow Filtration oder mittels konventionellen Filterverfahren betrieben wird.

Es hat sich bewährt, wenn das mindestens eine Filterelement und die Flüssigkeitsoberfläche zum Lösen von Verunreinigungen relativ zueinander bewegt werden, so dass die Flüssigkeitsoberfläche hierbei zumindest abschnittsweise entlang des mindestens einen Filterelementes wandert und hierbei in Schwingung versetzt wird. Somit kann es sein, dass die Flüssigkeitsoberfläche kontinuierlich in Schwingung versetzt ist, während die Flüssigkeitsoberfläche zumindest abschnittsweise entlang des mindestens einen Filterelementes wandert.

Wie vorhergehend bereits erwähnt, kann eine Schwingungserzeugungseinrichtung vorgesehen sein, welche die Flüssigkeitsoberfläche der durch die Filteranlage aufgenommenen Flüssigkeit in Schwingung versetzt, wobei Verunreinigungen von dem mindestens einen hierbei in der Filteranlage angeordneten Filterelement mittels der in Schwingung versetzten Flüssigkeitsoberfläche gelöst werden. Hierbei kann es sein, dass die Schwingungserzeugungseinrichtung kontinuierlich bzw. unterbrechungsfrei betrieben wird, wenn das mindestens eine Filterelement und die Flüssigkeitsoberfläche zum Lösen von Verunreinigungen relativ zueinander bewegt werden, wobei die Flüssigkeitsoberfläche hierbei zumindest abschnittsweise entlang des mindestens einen Filterelementes wandert.

Alternativ oder ergänzend hierzu kann es sein, dass das mindestens eine Filterelement und die Flüssigkeitsoberfläche relativ zueinander bewegt werden, so dass die Flüssigkeitsoberfläche mehrere vorgegebene Positionen des mindestens einen Filterelementes erreicht, in welchen mehreren vorgegebenen Positionen die Flüssigkeitsoberfläche jeweils über eine vorgegebene Zeitdauer verweilt und hierbei jeweils zum Lösen von Verunreinigungen in Schwingung versetzt wird bzw. hierbei jeweils zum Lösen von Verunreinigungen über die Schwingungserzeugungseinrichtung in Schwingung versetzt wird.

Bewährt haben sich Ausführungsformen, bei denen das mindestens eine Filterelement und die Flüssigkeit in einem Gehäuse der Filteranlage aufgenommen sind und bei welchem Flüssigkeit aus dem Gehäuse der Filteranlage abgelassen wird, woraus resultierend das mindestens eine Filterelement und die Flüssigkeitsoberfläche relativ zueinander bewegt werden. Hierbei kann ein Ventil vorgesehen sein, welches geöffnet wird, um Flüssigkeit aus dem Gehäuse abzulassen. Bewährt hat es sich, wenn die Flüssigkeit vollständig oder zumindest näherungsweise vollständig aus dem Gehäuse abgelassen wird, wobei ein Flüssigkeitsniveau während des vollständigen Ablassens sukzessive sinkt und sich die Flüssigkeitsoberfläche hierbei entlang des mindestens einen im Gehäuse aufgenommenen Filterelementes bewegt. Ein vollständiges Ablassen der Flüssigkeit kann in der Praxis sinnvoll sein, um gewährleisten zu können, dass keine mittels der Flüssigkeitsoberfläche vom mindestens einen Filterelement gelösten Verunreinigungen im Gehäuse der Filteranlage verbleiben. Die vom mindestens einen Filterelement mittels der schwingenden Bewegung der Flüssigkeitsoberfläche gelösten Verunreinigungen können mit der Flüssigkeit, die zumindest näherungsweise vollständig aus dem Gehäuse abgelassen wird, aus dem Gehäuse der Filteranlage entfernt werden.

Alternativ oder ergänzend hierzu kann das mindestens eine Filterelement an einer Halteeinrichtung befestigt sein, welche über mindestens einen Aktor angehoben wird, woraus resultierend das mindestens eine Filterelement und die Flüssigkeitsoberfläche relativ zueinander bewegt werden.

Es kann sein, dass das mindestens eine Filterelement zum Erzeugen der Schwingung der Flüssigkeitsoberfläche über mindestens einen Aktor bzw. über die bereits erwähnte Schwingungserzeugungseinrichtung oszillierend bewegt wird.

Auch kann es sein, dass das mindestens eine Filterelement und die Flüssigkeit in einem Gehäuse der Filteranlage aufgenommen sind und dass wenigstens ein Unwuchtmotor vorgesehen ist, welcher auf dem Gehäuse aufsitzt und eine Vibrationsbewegung für das Gehäuse erzeugt, wodurch die Flüssigkeitsoberfläche der im Gehäuse aufgenommenen Flüssigkeit in Schwingung versetzt wird. Denkbar ist auch, dass der wenigstens eine Unwuchtmotor auf einer Halteeinrichtung aufsitzt, an welcher das mindestens eine Filterelement befestigt ist und eine Vibrationsbewegung für die Halteeinrichtung und das mindestens eine an der Halteeinrichtung befestigte Filterelement erzeugt, wodurch die Flüssigkeitsoberfläche der im Gehäuse aufgenommenen Flüssigkeit in Schwingung versetzt wird.

Weiter kann es sein, dass das mindestens eine Filterelement mit Luftblasen beaufschlagt wird, während Verunreinigungen von dem mindestens einen hierbei in der Filteranlage angeordneten Filterelement mittels der in Schwingung versetzten Flüssigkeitsoberfläche gelöst werden. Es kann eine Kartusche vorgesehen sein, innerhalb derer das mindestens eine Filterelement angeordnet ist. Luftblasen können ggf. in die Kartusche eingebracht werden, um Verunreinigungen von dem mindestens einen hierbei innerhalb der Kartusche angeordneten mindestens einen Filterelement mittels der in Schwingung versetzten Flüssigkeitsoberfläche und der in die Kartusche eingebrachten Luftblasen zu lösen. Für diverse Ausführungsformen ist denkbar, dass das mindestens eine Filterelement und die Flüssigkeitsoberfläche zum Lösen von Verunreinigungen relativ zueinander bewegt werden, so dass die Flüssigkeitsoberfläche hierbei zumindest abschnittsweise entlang des mindestens einen Filterelemente wandert und hierbei in Schwingung versetzt wird, wobei das mindestens eine Filterelement zudem mit Luftblasen beaufschlagt wird, während die Flüssigkeitsoberfläche zumindest abschnittsweise entlang des mindestens einen Filterelementes wandert.

In der Praxis haben sich Ausführungsformen bewährt, bei welchen sich ein Stößel in der Flüssigkeit befindet, welcher insbesondere unter Wirkverbindung mit einer Spule oszillierend bewegt wird, wodurch die Flüssigkeitsoberfläche der durch die Filteranlage aufgenommenen Flüssigkeit in Schwingung versetzt wird.

In diversen Ausführungsformen kann es sein, dass die Filteranlage rückgespült wird, während Verunreinigungen von dem mindestens einen hierbei in der Filteranlage angeordneten Filterelement mittels der in Schwingung versetzten Flüssigkeitsoberfläche gelöst werden. Bei solchen Ausführungsformen können Verunreinigungen schneller und effizienter von dem mindestens einen Filterelement abgetragen werden.

Die Erfindung betrifft zudem eine Filteranlage für Flüssigkeiten. Merkmale, welche vorhergehend bereits zu diversen Ausführungsformen des erfindungsgemäßen Verfahrens beschrieben wurden können ebenso bei den nachfolgend beschriebenen Ausführungsformen der erfindungsgemäßen Filteranlage vorgesehen sein, ohne erneut erwähnt zu werden. Ebenso können nachfolgend zu diversen Ausführungsformen der erfindungsgemäßen Filteranlage beschriebene Merkmale bei den vorhergehend bereits beschriebenen Ausführungsformen des erfindungsgemäßen Verfahrens vorgesehen sein ohne erneut erwähnt zu werden. Die Filteranlage kann ggf. zur Durchführung der vorhergehend bereits beschriebenen Ausführungsformen des erfindungsgemäßen Verfahrens ausgebildet sein. Ebenso können die vorhergehend bereits beschriebenen Ausführungsformen des erfindungsgemäßen Verfahrens ggf. mit den nachfolgend beschriebenen Ausführungsformen der erfindungsgemäßen Filteranlage durchgeführt werden.

Die Filteranlage umfasst mindestens ein Filterelement. Weiter umfasst die Filteranlage eine Schwingungserzeugungseinrichtung, über welche eine Flüssigkeitsoberfläche einer in der Filteranlage aufgenommenen Flüssigkeit derart in Schwingung versetzbar ist, dass Verunreinigungen von dem mindestens einen Filterelement mittels der in Schwingung versetzten Flüssigkeitsoberfläche lösbar sind. Die Filteranlage kann eine Steuerungseinrichtung umfassen, welche mit der Schwingungserzeugungseinrichtung in Verbindung steht. Die Schwingungserzeugungseinrichtung kann über die Steuerungseinrichtung derart ansteuerbar sein, dass die Flüssigkeitsoberfläche über die Schwingungserzeugungseinrichtung in eine definierte Schwingung versetzbar ist, bei welcher definierten Schwingung Verunreinigungen von dem mindestens einen Filterelement lösbar sind.

Die Filteranlage kann ein Gehäuse umfassen, welches zur Aufnahme des mindestens einen Filterelementes und der Flüssigkeit ausgebildet ist. Weiter kann das Gehäuse einen Gehäuseauslass umfassen, über den zum Absenken des Flüssigkeitsniveaus Flüssigkeit aus dem Gehäuse abgelassen werden kann. Es ist denkbar, dass die Filteranlage mindestens ein Ventil umfasst, über dessen Betätigung zum Absenken des Flüssigkeitsniveaus Flüssigkeit über den Gehäuseauslass aus dem Gehäuse abgelassen werden kann.

Alternativ oder ergänzend hierzu kann die Schwingungserzeugungseinrichtung eine Spule und einen im Gehäuse positionierten und/oder in das Gehäuse hineinragenden Stößel umfassen, wobei der Stößel über die Spule oszillierend bewegbar ist, um die Flüssigkeitsoberfläche der im Gehäuse aufgenommenen Flüssigkeit in Schwingung zu versetzen. Die Spule kann hierbei vollständig außerhalb des Gehäuses positioniert sein.

Auch sind Ausführungsformen vorstellbar, bei welchen die Filteranlage ein Gehäuse, welches zur Aufnahme des mindestens einen Filterelementes und der Flüssigkeit ausgebildet ist und wenigstens einen Unwuchtmotor umfasst. Es kann hierbei sein, dass der wenigstens eine Unwuchtmotor auf einer Außenseite des Gehäuses aufsitzt und zum Übertragen der Vibrationsbewegung auf das Gehäuse ausgebildet ist und/oder dass der wenigstens eine Unwuchtmotor auf einer Halteeinrichtung aufsitzt, an welcher das mindestens eine Filterelement befestigt ist und zum Übertragen einer Vibrationsbewegung auf die Halteeinrichtung und das hieran angeordnete mindestens eine Filterelement ausgebildet ist.

Weiter kann es sein, dass die Schwingungserzeugungseinrichtung und das mindestens eine Filterelement an einer Halteeinrichtung befestigt sind und jeweils innerhalb des vorherig bereits erwähnten Gehäuses angeordnet sind, wobei die Halteeinrichtung von dem Gehäuse zumindest näherungsweise schwingungstechnisch entkoppelt ist. Hierbei kann es sein, dass das mindestens eine Filterelement von der Schwingungserzeugungseinrichtung getragen wird bzw. an der Schwingungserzeugungseinrichtung angeordnet ist, wobei die Schwingungserzeugungseinrichtung an der Halteeinrichtung angeordnet ist. In alternativen Ausführungsformen kann es sein, dass das mindestens eine Filterelement und die Schwingungserzeugungseinrichtung derart an der Halteeinrichtung angeordnet sind, dass die Schwingungserzeugungseinrichtung eine Vibrationsbewegung auf das mindestens eine Filterelement überträgt, über welche die in der Filteranlage aufgenommene Flüssigkeit derart in Schwingung versetzbar ist, dass Verunreinigungen von dem mindestens einen Filterelement mittels der in Schwingung versetzten Flüssigkeitsoberfläche lösbar sind.

Um die Halteeinrichtung von dem Gehäuse zumindest näherungsweise schwingungstechnisch zu entkoppeln, kann die Filteranlage mindestens ein elastisches Element umfassen, über das die Halteeinrichtung mit dem Gehäuse in Verbindung steht. Das mindestens eine elastische Element kann durch Gummi, durch Kunststoff oder durch ein anderes elastisches Material ausgebildet sein. Beispielsweise kann es sein, dass das mindestens eine elastische Element strangförmig verläuft und die Halteeinrichtung zumindest in einem Nahbereich am Gehäuse aufnimmt.

Bewährt haben sich auch Ausführungsformen, bei denen die Filteranlage eine Steuerungseinrichtung umfasst, welche derart ausgebildet ist, dass sie die Filteranlage zum Durchführen einer Rückspülung ansteuert, während die Schwingungserzeugungseinrichtung aufgrund einer Ansteuerung über die Steuerungseinrichtung die Flüssigkeitsoberfläche in Schwingung versetzt.

Die nachfolgende Beschreibung dient lediglich zur Verdeutlichung von einzelnen Aspekten, die bei der Erfindung vorgesehen sein können und ist als nicht einschränkend zu verstehen.

Membrantypen können sich unter anderem in den folgenden Parametern unterscheiden:
- Materialien, beispielsweise PE, PFDE... , harte oder flexible Materialien
- Form, beispielsweise Hohlfasern oder Plattenmembranen...
- Betriebsweisen, beispielsweise crossflow oder outside inside etc...
- Porenweiten, beispielsweise Mikro, Ultra, Nano oder Umkehrosmose

Die oft genannten Nachteile der Membranfiltration, wie
- hoher Energieverbrauch durch benötigten Differenzdruck
- Membranfouling erhöht den notwendigen Differenzdruck
- Fette und Öle verstopfen die Membran
- begrenzter Saug- und Rückspüldruck bei Plattenmembranen
- hoher Wartungsaufwand infolge spezieller, chemischer Reinigung durch Fachpersonal
- geringe Membranstandzeiten
- hoher Preis der Membranfilter

können durch eine Optimierung der Vorfilterung, des biologischen Abbaus und durch neuartige Betriebs- und Reinigungsmethoden soweit gelöst werden, dass die Membrantechnik in immer breiteren Anwendungsbereichen Verwendung findet.

Ein wesentlicher Grund für die Minimierung der Durchflussleistung können Ablagerungen auf der Membranoberfläche darstellen. Diese Ablagerungen minimieren die Durchflussleistung, erhöhen den Energieverbrauch und den Wartungsaufwand. Diese Ablagerungen können bei Hohlfasermembranen teilweise durch eine Rückspülung entfernt werden. Zumeist wird auch versucht, diese Ablagerungen durch das Einbringen von Luftblasen und deren Schwerwirkung von der Oberfläche der Fasern zu lösen. Aufgrund der geringen Dichte der Luft ist die Scherwirkung allerdings begrenzt.

Bei Plattenmembranen muss hier der Plattenabstand und die Größe der Luftblasen genau eingestellt werden, um eine ausrechende Wirkung zu erzielen, was sich in der Praxis oft als schwierig herausstellt.

Bei Hohlfasern im Outside-Inside Verfahren weichen die Luftblasen in Bereiche aus, die einfacher zu durchströmen sind. Bei Membranfasern werden flexible Fasern und starre Fasern unterschieden. Bei flexiblen Fasern ist es schwieriger, den Schmutz von den Fasern abzuscheren, da diese den Luftblasen nachgeben. Einige Systeme arbeiten daher mit einer Kartuschenummantelung und einer speziellen Anordnung der Fasern, um ein Ausweichen der Luftblasen und ein Ausweichen der Fasern zu verhindern. Eine zusätzliche chemische Reinigung beispielsweise soll bei einigen Systemen neben der Reinigung des Faserinneren auch die Haftung der Ablagerungen auf der Membranoberfläche minimieren und somit die Abreinigung ebenfalls erleichtern. Eine weitere Möglichkeit stellt die mechanische Reinigung mit Wasser dar, das im Vergleich zu Luft eine höhere Dichte aufweist, was zu einer höheren Scherkraft und somit einer entsprechend höheren Reinigungsleistung führt. In Inside-Outside Filtrationsverfahren wird mittels einer Wasserspülung versucht, den Schmutz aus den Fasern zu spülen. Aufgrund der geringen Durchmesser der Membranfasern sind Reibung und Druckverlust groß. Dies führt bei der Rückspülung zu einem großen Energieverlust. Bei Outside-Inside Systemen kann eine Spülung auch von außen per Wasserstrahl erfolgen. Dies ist aber im laufenden Prozess nur möglich, wenn sich die Fasern selber nicht mehr im Wasser befinden, also beispielsweise entnommen werden. Dies wiederum bedeutet eine Unterbrechung des Filtrationsprozesses und einen erhöhten Wartungsaufwand. Bei der vorliegenden Erfindung wird das Wasser, welches die Membranen umgibt, mit speziellen Frequenzen in Schwingung versetzt. Die Bewegungsamplituden der Fasern gegenüber dem Wasser aufgrund von Trägheitseffekten ermöglichen es dem Schmutz, der sich auf den Fasern angesetzt hat, sich zu lösen. Nach der Schwingung werden die gelösten Partikel entweder über Luftblasen oder das Ablassen des Wassers weggespült. Für das Verfahren können sowohl Hohlfasern als auch Plattenmembranen verwendet werden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1a und 1b zeigen eine schematische Ansicht einer Filteranlage und verdeutlichen eine Ausführungsform eines erfindungsgemäßen Verfahrens;
Figur 2 zeigt weitere Aspekte, wie sie bei diversen Ausführungsformen einer erfindungsgemäßen Filteranlage sowie in diversen Ausführungsformen des erfindungsgemäßen Verfahrens vorgesehen sein können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

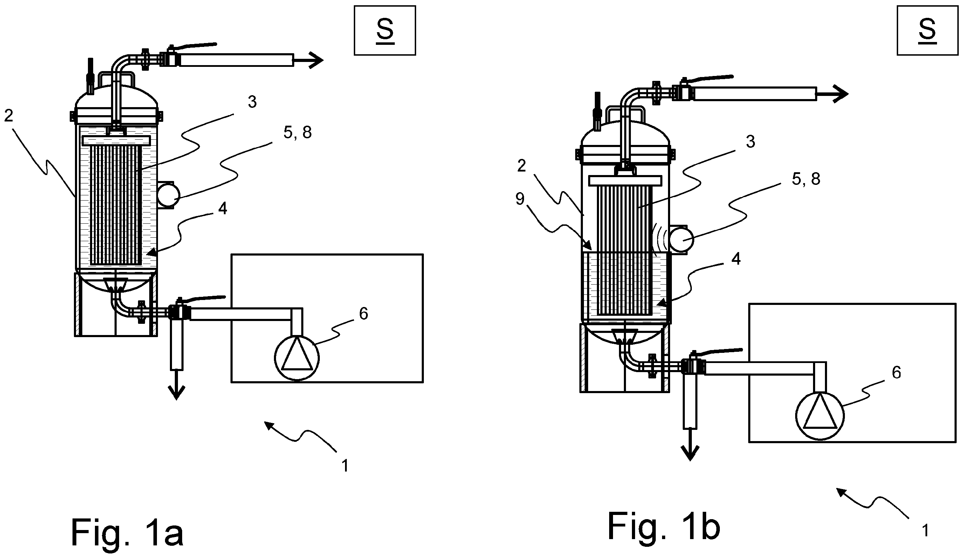

Figur 1a und 1b zeigen eine schematische Ansicht einer Filteranlage 1 und verdeutlichen eine Ausführungsform eines erfindungsgemäßen Verfahrens. Die Filteranlage 1 des Ausführungsbeispiels nach Figuren 1a und 1b umfasst ein Gehäuse 2 sowie ein innerhalb des Gehäuses 2 angeordnetes Filterelement 3. In Figur 1a ist das Filterelement 3 vollständig von Flüssigkeit 4 umgeben. Auch die Flüssigkeit 4 ist durch das Gehäuse 2 aufgenommen. An einer Außenseite des Gehäuses 2 befindet sich ein Unwuchtmotor 5.

Soll das Filterelement 3 gereinigt werden, so ergeben sich die zur Reinigung des Filterelementes 3 durchzuführenden Verfahrensschritte aus einer Zusammenschau der Figur 1a mit Figur 1b. In Figur 1a ist das Filterelement 3 noch vollständig innerhalb der Flüssigkeit 4 angeordnet. Zum Reinigen des Filterelementes 3 wird die Flüssigkeit 4 aus dem Gehäuse 2 abgelassen, woraufhin sich das Filterelement 3 nur noch anteilig in der Flüssigkeit befindet und eine obere Partie des Filterelementes 3 freigelegt ist. Zeitlich überlagert mit dem Ablassen der Flüssigkeit 4 beaufschlagt der Unwuchtmotor 5 das Gehäuse 2 mit einer Vibrationsbewegung, wodurch eine Flüssigkeitsoberfläche 9 in Schwingung versetzt wird. Der Unwuchtmotor 5 steht mit der Steuerungseinrichtung S in Verbindung und wird über die Steuerungseinrichtung S betätigt. Über Scherkräfte wirkt die in Schwingung versetzte Flüssigkeitsoberfläche 9 auf das Filterelement 3 ein und entfernt hierdurch Verunreinigungen vom Filterelement 3. Der Unwuchtmotor 5 ist somit als Schwingungserzeugungseinrichtung 8 ausgebildet.

Die vom Filterelement 3 gelösten Verunreinigungen befinden sich weiterhin in der Flüssigkeit 4 bzw. in einem verbleibenden Anteil der Flüssigkeit 4. Mit einem Öffnen des Ventils 6 werden die Verunreinigungen aus dem Gehäuse 2 der Filteranlage 1 gespült.

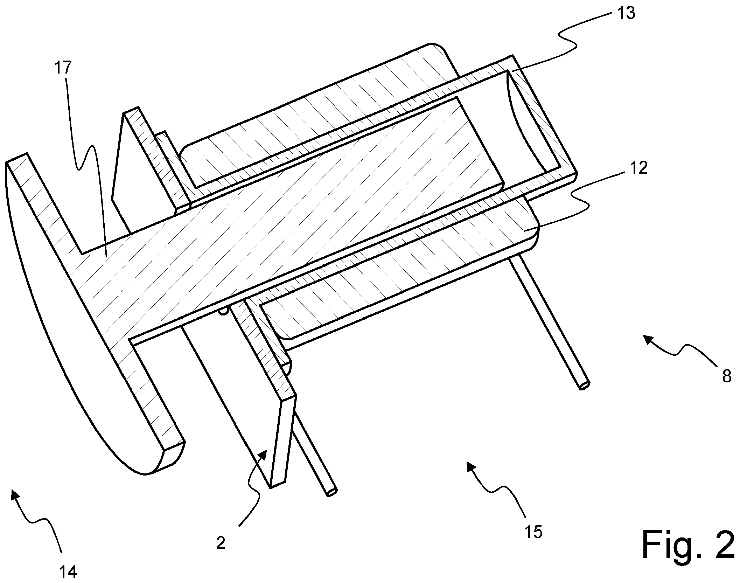

Figur 2 zeigt weitere Aspekte, wie sie bei diversen Ausführungsformen einer erfindungsgemäßen Filteranlage 1 sowie in diversen Ausführungsformen des erfindungsgemäßen Verfahrens vorgesehen sein können. Insbesondere zeigt Figur 2 eine weitere Ausführungsform für eine Schwingungserzeugungseinrichtung 8, mittels welcher eine Flüssigkeitsoberfläche 9 (vgl. Figur 1b) in Schwingung versetzt werden kann, um mittels der in Schwingung versetzten Flüssigkeitsoberfläche über Scherkräfte Verunreinigungen vom Filterelement 3 zu lösen.

Ziffer 2 verweist weiterhin auf ein Gehäuse 2 (vgl. Figuren 1a und 1b) bzw. auf einen Anteil einer Gehäusewand eines solchen Gehäuses 2. In das Innere bzw. eine Wasserseite 14 des Gehäuses 2 erstreckt sich ein Stößel 17. Der Stößel 17 ist innerhalb einer Dichthülse 13 angeordnet, so dass keine Flüssigkeit 4 (vgl. Figuren 1a und 1b) in den Trockenbereich 15 gelangen kann. Bestandteil der Schwingungserzeugungseinrichtung 8 ist eine Spule 12. Die Spule 12 kann eine oszillierende Bewegung des Stößels 17 veranlassen, wodurch eine Flüssigkeitsoberfläche 9 in Schwingung versetzt wird, um Verunreinigungen von einem Filterelement 3 zu lösen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Filteranlage
- 2: Gehäuse
- 3: Filterelement
- 4: Flüssigkeit
- 5: Unwuchtmotor
- 6: Ventil
- 8: Schwingungserzeugungseinrichtung
- 9: Flüssigkeitsoberfläche
- 12: Spule
- 13: Dichthülse
- 14: Wasserseite
- 15: Trockenbereich
- 17: Stößel
- S: Steuerungseinrichtung

## Patentansprüche

1. Verfahren zur Reinigung mindestens eines Filterelementes (3) einer Filteranlage (1) für Flüssigkeiten (4), bei welchem eine Flüssigkeitsoberfläche (9) einer durch die Filteranlage (1) aufgenommenen Flüssigkeit (4) in Schwingung versetzt wird und Verunreinigungen von dem mindestens einen hierbei in der Filteranlage (1) angeordneten Filterelement (3) mittels der in Schwingung versetzten Flüssigkeitsoberfläche (9) gelöst werden.

2. Verfahren nach Anspruch 1, bei welchem das mindestens eine Filterelement (3) und die Flüssigkeitsoberfläche (9) zum Lösen von Verunreinigungen relativ zueinander bewegt werden, so dass die Flüssigkeitsoberfläche (9) hierbei zumindest abschnittsweise entlang des mindestens einen Filterelementes (3) wandert und hierbei in Schwingung versetzt wird.

3. Verfahren nach Anspruch 1 oder Anspruch 2, bei welchem das mindestens eine Filterelement (3) und die Flüssigkeitsoberfläche (9) relativ zueinander bewegt werden, so dass die Flüssigkeitsoberfläche (9) mehrere vorgegebene Positionen des mindestens einen Filterelementes (3) erreicht, in welchen mehreren vorgegebenen Positionen die Flüssigkeitsoberfläche (9) jeweils über eine vorgegebene Zeitdauer verweilt und hierbei jeweils zum Lösen von Verunreinigungen in Schwingung versetzt wird.

4. Verfahren nach Anspruch 2 oder Anspruch 3, bei welchem das mindestens eine Filterelement (3) und die Flüssigkeit (4) in einem Gehäuse (2) der Filteranlage (1) aufgenommen sind und bei welchem Flüssigkeit (4) aus dem Gehäuse (2) der Filteranlage (1) abgelassen wird, woraus resultierend das mindestens eine Filterelement (3) und die Flüssigkeitsoberfläche (9) relativ zueinander bewegt werden.

5. Verfahren nach einem der Ansprüche 1 bis 4, bei welchem das mindestens eine Filterelement (3) zum Erzeugen der Schwingung der Flüssigkeitsoberfläche (9) über mindestens einen Aktor insbesondere oszillierend bewegt wird.

6. Verfahren nach einem der Ansprüche 1 bis 5, bei welchem das mindestens eine Filterelement (3) und die Flüssigkeit (4) in einem Gehäuse (2) der Filteranlage (1) aufgenommen sind und bei welchem wenigstens ein Unwuchtmotor (5) vorgesehen ist, welcher
a) auf dem Gehäuse (2) aufsitzt und eine Vibrationsbewegung für das Gehäuse (2) erzeugt, wodurch die Flüssigkeitsoberfläche (9) der im Gehäuse (2) aufgenommenen Flüssigkeit (4) in Schwingung versetzt wird und/oder welcher Unwuchtmotor (5)
b) auf einer Halteeinrichtung aufsitzt, an welcher das mindestens eine Filterelement (3) befestigt ist und eine Vibrationsbewegung für die Halteeinrichtung und das mindestens eine an der Halteeinrichtung befestigte Filterelement (3) erzeugt, wodurch die Flüssigkeitsoberfläche (9) der im Gehäuse (2) aufgenommenen Flüssigkeit (4) in Schwingung versetzt wird.

7. Verfahren nach einem der Ansprüche 1 bis 6, bei welchem das mindestens eine Filterelement (3) mit Luftblasen beaufschlagt wird, während Verunreinigungen von dem mindestens einen hierbei in der Filteranlage (1) angeordneten Filterelement (3) mittels der in Schwingung versetzten Flüssigkeitsoberfläche (9) gelöst werden.

8. Verfahren nach einem der Ansprüche 1 bis 7, bei welchem sich ein Stößel (17) in der Flüssigkeit (4) befindet, welcher insbesondere unter Wirkverbindung mit einer Spule (12) oszillierend bewegt wird, wodurch die Flüssigkeitsoberfläche (9) der durch die Filteranlage (1) aufgenommenen Flüssigkeit (4) in Schwingung versetzt wird.

9. Verfahren nach einem der Ansprüche 1 bis 8, bei welchem die Filteranlage (1) rückgespült wird, während Verunreinigungen von dem mindestens einen hierbei in der Filteranlage (1) angeordneten Filterelement (3) mittels der in Schwingung versetzten Flüssigkeitsoberfläche (9) gelöst werden.

10. Filteranlage (1) für Flüssigkeiten (4), umfassend
- mindestens ein Filterelement (3) und
- eine Schwingungserzeugungseinrichtung (8), über welche eine Flüssigkeitsoberfläche (9) einer in der Filteranlage (1) aufgenommenen Flüssigkeit (4) derart in Schwingung versetzbar ist, dass Verunreinigungen von dem mindestens einen Filterelement (3) mittels der in Schwingung versetzten Flüssigkeitsoberfläche (9) lösbar sind.

11. Filteranlage nach Anspruch 10 mit einem Gehäuse (2), welches zur Aufnahme des mindestens einen Filterelementes (3) und der Flüssigkeit (4) ausgebildet ist und mit mindestens einem Gehäuseauslass, über den zum Absenken des Flüssigkeitsniveaus Flüssigkeit (4) aus dem Gehäuse (2) abgelassen werden kann.

12. Filteranlage nach Anspruch 10 oder Anspruch 11, mit einem Gehäuse (2), welches zur Aufnahme des mindestens einen Filterelementes (3) und der Flüssigkeit (4) ausgebildet ist und bei welcher die Schwingungserzeugungseinrichtung (8) eine Spule (12) und einen im Gehäuse (2) positionierten und/oder in das Gehäuse (2) hineinragenden Stößel (17) umfasst, wobei der Stößel (17) über die Spule (12) oszillierend bewegbar ist, um die Flüssigkeitsoberfläche (9) der im Gehäuse (2) aufgenommenen Flüssigkeit (4) in Schwingung zu versetzen.

13. Filteranlage nach einem der Ansprüche 10 bis 12, mit einem Gehäuse (2), welches zur Aufnahme des mindestens einen Filterelementes (3) und der Flüssigkeit (4) ausgebildet ist und mit wenigstens einem Unwuchtmotor (5), wobei
a) der wenigstens eine Unwuchtmotor (5) auf einer Außenseite des Gehäuses (2) aufsitzt und zum Übertragen einer Vibrationsbewegung auf das Gehäuse (2) ausgebildet ist und/oder wobei
b) der wenigstens eine Unwuchtmotor (5) auf einer Halteeinrichtung aufsitzt, an welcher das mindestens eine Filterelement (3) befestigt ist und zum Übertragen einer Vibrationsbewegung auf die Halteeinrichtung und das hieran angeordnete mindestens eine Filterelement (3) ausgebildet ist.

14. Filteranlage nach einem der Ansprüche 11 bis 13, bei welcher die Schwingungserzeugungseinrichtung (8) und das mindestens eine Filterelement (3) an einer Halteeinrichtung befestigt sind und jeweils innerhalb des Gehäuses (2) angeordnet sind, wobei die Halteeinrichtung von dem Gehäuse (2) zumindest näherungsweise schwingungstechnisch entkoppelt ist.

15. Filteranlage nach einem der Ansprüche 10 bis 14, umfassend eine Steuerungseinrichtung (S), welche derart ausgebildet ist, dass sie die Filteranlage (1) zum Durchführen einer Rückspülung ansteuert, während die Schwingungserzeugungseinrichtung (8) aufgrund einer Ansteuerung über die Steuerungseinrichtung (S) die Flüssigkeitsoberfläche (9) in Schwingung versetzt.
